# EUROPÄISCHE PATENTANMELDUNG

(11) **EP 1 747 957 A1**
(43) Veröffentlichungstag der Anmeldung: **31.01.2007**
(21) Anmeldenummer: 05016333.6
(22) Anmeldetag: 27.07.2005
(51) Int. Cl.: B60T 13/74, B60T 13/02

(54) **Getriebe für ein Bremssystem und Bremssystem**

(71) Anmelder: SIEMENS AKTIENGESELLSCHAFT, 80333 München (DE)
(72) Erfinder: Stürzer, Jürgen, 94330 Aiterhofen (DE)

(57) **Zusammenfassung**

Ein Getriebe (6) für ein Bremssystem (1) ist eingangsseitig über eine Antriebswelle (5) mit einem Stellantrieb (4) des Bremssystems (1) koppelbar. Die Antriebswelle (5) ist durch den Stellantrieb (4) rotatorisch bewegbar. Das Getriebe (6) ist ausgangsseitig über eine Abtriebswelle (9) mit einer Bremseinheit (3) des Bremssystems (1) koppelbar. Die Bremseinheit (3) umfasst mindestens eine Bremse. Das Getriebe (6) umfasst einen ersten und einen zweiten Getriebestrang (7, 8) mit unterschiedlich großem Übersetzungsverhältnis. Das Getriebe (6) ist ferner so ausgebildet, dass zum Anziehen der Bremse nur der erste Getriebestrang (7) und zum Lösen der Bremse nur der zweite Getriebestrang (8) des Getriebes (6) ein Antriebsdrehmoment des Stellantriebs (4) auf die Abtriebswelle (9) überträgt. Das Übersetzungsverhältnis des zweiten Getriebestrangs (8) ist größer als das Übersetzungsverhältnis des ersten Getriebestrangs (7).

## Beschreibung

Die Erfindung betrifft ein Getriebe für ein Bremssystem und ein Bremssystem, insbesondere ein elektrisch steuerbares Bremssystem, z.B. ein Parkbremssystem in einem Kraftfahrzeug.

An Bremssysteme, insbesondere an Bremssysteme in Kraftfahrzeugen, werden hohe Anforderungen bezüglich der Sicherheit und Zuverlässigkeit gestellt.

Die Aufgabe der Erfindung ist, ein Getriebe und ein Bremssystem zu schaffen, das ein zuverlässiges und sicheres Bremsen ermöglicht.

Die Aufgabe wird gelöst durch die Merkmale der unabhängigen Patentansprüche. Vorteilhafte Weiterbildungen der Erfindung sind in den Unteransprüchen gekennzeichnet.

Gemäß eines ersten Aspekts zeichnet sich die Erfindung aus durch ein Getriebe für ein Bremssystem, bei dem das Getriebe eingangsseitig über eine Antriebswelle mit einem Stellantrieb des Bremssystems koppelbar ist und die Antriebswelle durch den Stellantrieb rotatorisch bewegbar ist. Das Getriebe ist ausgangsseitig über eine Abtriebswelle mit einer Bremseinheit des Bremssystems koppelbar. Die Bremseinheit umfasst mindestens eine Bremse. Das Getriebe kann auch die Antriebswelle und/oder die Abtriebswelle umfassen. Das Getriebe umfasst einen ersten und einen zweiten Getriebestrang mit unterschiedlich großem Übersetzungsverhältnis. Das Getriebe ist ferner so ausgebildet, dass zum Anziehen der Bremse nur der erste Getriebestrang und zum Lösen der Bremse nur der zweite Getriebestrang des Getriebes ein Antriebsdrehmoment des Stellantriebs auf die Abtriebswelle überträgt. Das Übersetzungsverhältnis des zweiten Getriebestrangs ist größer als das Übersetzungsverhältnis des ersten Getriebestrangs.

Der Vorteil ist, dass für das Anziehen und für das Lösen der Bremse unterschiedlich große Übersetzungsverhältnisse gewählt werden können. Dadurch kann das Anziehen der Bremse durch das geringe Übersetzungsverhältnis mit einer großen Kraft erfolgen und das Lösen der Bremse durch das hohe Übersetzungsverhältnis sehr schnell erfolgen. Insbesondere kann die Bremse so sehr schnell gelöst werden, wenn beispielsweise ein Rad durch die angezogene Bremse blockiert ist. Durch eine geeignete Ansteuerung des Stellantriebs kann so beispielsweise ein Antiblockiersystem realisiert werden. Ferner kann so z.B. für ein Parkbremssystem in einem Kraftfahrzeug eine dynamische Notbremsfunktion vorgesehen werden, die das elektrisch gesteuerte Bremsen zuverlässig und sicher ermöglicht, z.B. bei Ausfall eines gegebenenfalls vorhandenen hydraulischen Bremssystems.

In einer vorteilhaften Ausgestaltung der Erfindung ist das Getriebe so ausgebildet, dass eine Auswahl entweder des ersten Getriebestrangs oder des zweiten Getriebestrangs abhängig von einer Drehrichtung der Antriebswelle erfolgt. Dies hat den Vorteil, dass die Drehrichtung der Antriebswelle sehr einfach durch ein geeignetes Ansteuern des Stellantriebs geändert werden kann. Dadurch ist gegebenenfalls ein weiterer Stellantrieb zum Schalten des Getriebes von dem ersten Getriebestrang auf den zweiten Getriebestrang oder von dem zweiten Getriebestrang auf den ersten Getriebestrang nicht erforderlich. Ein mit einem solchen Getriebe ausgestattetes Bremssystem kann so sehr einfach und preisgünstig ausgebildet sein.

In einer weiteren vorteilhaften Ausgestaltung der Erfindung umfasst das Getriebe eine Koppeleinheit, die so angeordnet ist, dass diese in einem ersten und in einem zweiten Positionsbereich bewegbar ist. Die Antriebswelle ist in dem ersten und in dem zweiten Positionsbereich jeweils über die Koppeleinheit derart mit der Abtriebswelle gekoppelt, dass durch das Koppeln in dem ersten Positionsbereich der erste Getriebestrang gebildet ist und durch das Koppeln in dem zweiten Positionsbereich der zweite Getriebestrang gebildet ist. Der Vorteil ist, dass ein solches Getriebe sehr einfach und preisgünstig ausgebildet sein kann.

In diesem Zusammenhang ist es vorteilhaft, wenn in der Antriebswelle oder der Abtriebswelle eine Längsverzahnung ausgebildet ist und das Koppelelement so axial in den ersten Positionsbereich oder den zweiten Positionsbereich verschiebbar auf der Antriebswelle bzw. der Abtriebswelle angeordnet ist. Das Koppelelement ist durch die Längsverzahnung rotatorisch mit der Antriebswelle bzw. der Abtriebswelle gekoppelt. Dies hat den Vorteil, dass das Koppelelement sehr einfach axial auf der Antriebswelle oder der Abtriebswelle verschiebbar ist und nur ein geringer Bauraum erforderlich ist.

In einer weiteren vorteilhaften Ausgestaltung der Erfindung ist in der Antriebswelle des Getriebes eine schraubenförmige Nut ausgebildet. Die Koppeleinheit weist einen Vorsprung auf und ist so axial verschiebbar auf der Antriebswelle angeordnet, dass der Vorsprung in die Nut eingreift und die Koppeleinheit durch Drehen der Antriebswelle abhängig von der Drehrichtung axial in den ersten Positionsbereich oder in den zweiten Positionsbereich verschoben wird. Dies hat den Vorteil, dass für das axiale Verschieben der Koppeleinheit kein zusätzlicher Stellantrieb erforderlich ist. Durch das Anordnen der Koppeleinheit auf der Antriebswelle ist ferner nur ein geringer Bauraum erforderlich.

In einer weiteren vorteilhaften Ausgestaltung der Erfindung umfasst die Koppeleinheit für den ersten Getriebestrang und den zweiten Getriebestrang jeweils mindestens ein Zahnrad oder einen Mitnehmer, das bzw. der in dem ersten Positionsbereich bzw. in dem zweiten Positionsbereich mit einem dem jeweiligen Getriebestrang zugeordneten weiteren Zahnrad bzw. weiteren Mitnehmer eingreift zum Übertragen des Antriebsdrehmoments. Dies hat den Vorteil, dass die unterschiedlichen Übersetzungsverhältnisse des ersten Getriebestrangs und des zweiten Getriebestrangs sehr einfach durch geeignetes Ausbilden der Zahnräder realisiert werden können. Ferner kann das Getriebe so besonders kompakt ausgebildet sein.

Gemäß eines zweiten Aspekts zeichnet sich die Erfindung aus durch ein Bremssystem, das eine Antriebseinheit und eine Bremseinheit mit mindestens einer Bremse umfasst. Die Antriebseinheit umfasst einen Stellantrieb, eine Antriebswelle, eine Abtriebswelle und das Getriebe. Die Antriebswelle ist mit dem Stellantrieb gekoppelt und ist von diesem rotatorisch bewegbar. Die Abtriebswelle ist so mit der Bremseinheit gekoppelt, dass die Bremseinheit abhängig von einer Drehrichtung der Abtriebswelle die Bremse anzieht oder löst. Das Getriebe ist eingangsseitig mit der Antriebswelle und ausgangsseitig mit der Abtriebswelle gekoppelt oder umfasst die Antriebswelle und/oder die Abtriebswelle. Die Vorteile dieses Bremssystems ergeben sich entsprechend aus den Vorteilen des Getriebes.

Ausführungsbeispiele der Erfindung sind im Folgenden anhand der schematischen Zeichnungen erläutert.

Es zeigen:
- Figur 1: ein Bremssystem,
- Figur 2: eine erste Ausführungsform eines Getriebes für das Bremssystem und
- Figur 3: eine zweite Ausführungsform des Getriebes für das Bremssystem.

Elemente gleicher Konstruktion oder Funktion sind figurenübergreifend mit den gleichen Bezugszeichen versehen.

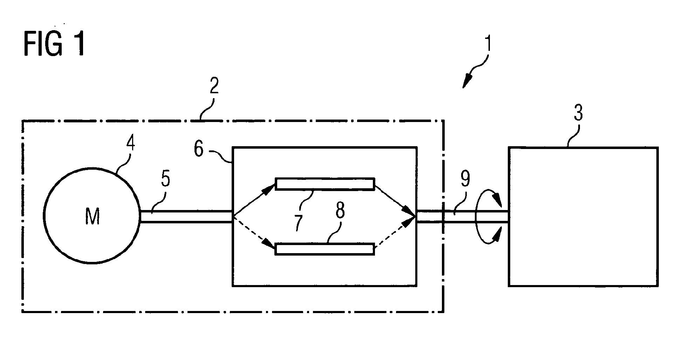

Ein Bremssystem 1, z.B. ein elektrisch steuerbares Parkbremssystem eines Kraftfahrzeugs, umfasst eine Antriebseinheit 2 und eine Bremseinheit 3 (Figur 1). Die Antriebseinheit 2 umfasst einen Stellantrieb 4 und ein Getriebe 6, das über eine Antriebswelle 5 mit dem Stellantrieb 4 gekoppelt ist. Das Getriebe 6 weist einen ersten Getriebestrang 7 und einen zweiten Getriebestrang 8 auf, denen jeweils ein Übersetzungsverhältnis zugeordnet ist. Das Getriebe 6 ist über eine Abtriebswelle 9 mit der Bremseinheit 3 gekoppelt. Das Übersetzungsverhältnis ist jeweils definiert als ein Verhältnis einer Drehzahl der Abtriebswelle 9 zu einer Drehzahl der Antriebswelle 5.

Das Bremssystem 1 ist so ausgebildet, dass ein Antriebsdrehmoment des Stellantriebs 4 über die Antriebswelle 5, den ersten Getriebestrang 7 und die Abtriebswelle 9 auf die Bremseinheit 3 übertragen wird und das Antriebsdrehmoment des Stellantriebs 4 zum Lösen der Bremse über die Antriebswelle 5, den zweiten Getriebestrang 8 und die Abtriebswelle 9 auf die Bremseinheit 3 übertragen wird. Das Anziehen oder das Lösen der Bremse erfolgt abhängig von einer Drehrichtung der Abtriebswelle 9. Das Übersetzungsverhältnis, das dem zweiten Getriebestrang 8 zugeordnet ist, ist größer als das Übersetzungsverhältnis, das dem ersten Getriebestrang 7 zugeordnet ist. Dadurch kann das Anziehen der Bremse abhängig von dem jeweils gewählten Übersetzungsverhältnis mit einer besonders großen Kraft und das Lösen der Bremse in einer besonders kurzen Zeitdauer erfolgen.

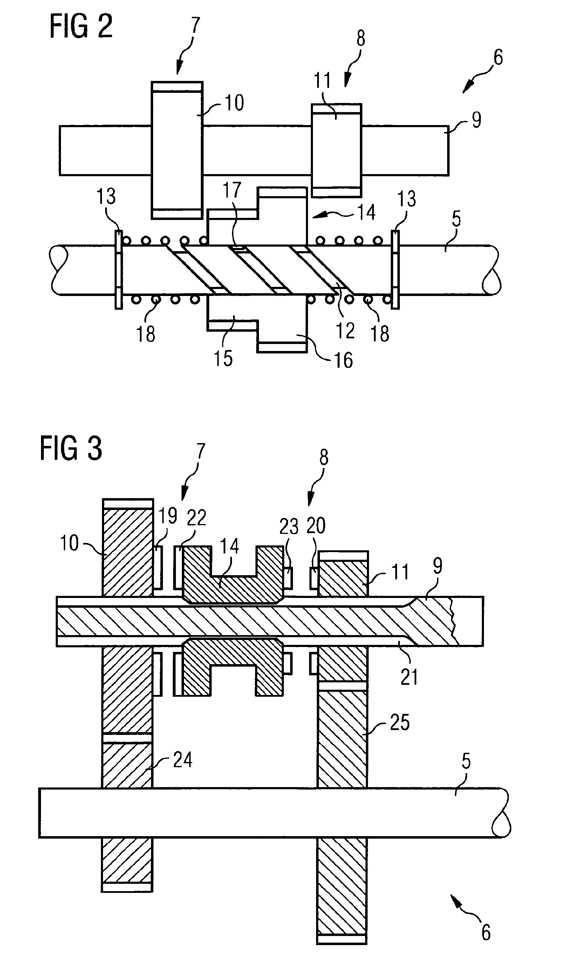

Figur 2 zeigt eine erste Ausführungsform des Getriebes 6. Die Antriebswelle 5 und die Abtriebswelle 9 sind zueinander parallel nebeneinander angeordnet. An der Abtriebswelle 9 sind ein erstes Zahnrad 10 und ein zweites Zahnrad 11 axial voneinander beabstandet befestigt. In der Antriebswelle 5 ist eine schraubenförmige Nut 12 ausgebildet. An der Antriebswelle 5 sind axial zueinander beabstandet zwei Sicherungsringe 13 angeordnet. Das Getriebe 6 umfasst ferner eine Koppeleinheit 14, die ein drittes Zahnrad 15 und ein viertes Zahnrad 16 umfasst und die einen Vorsprung 17 aufweist. Die Koppeleinheit 14 ist so axial verschiebbar auf der Antriebswelle 5 angeordnet, dass der Vorsprung 17 in die Nut 12 eingreift. Die Koppeleinheit 14 ist zwischen den zwei Sicherungsringen 13 angeordnet. Zwischen dem jeweiligen Sicherungsring 13 und der Koppeleinheit 14 kann jeweils ein Federelement 18 angeordnet sein.

Durch Drehen der Antriebswelle 5 in eine erste Drehrichtung wird die Koppeleinheit 14 durch ihren in die Nut 12 eingreifenden Vorsprung 17 axial entlang der Antriebswelle 5 in einen ersten Positionsbereich verschoben, in dem das dritte Zahnrad 15 der Koppeleinheit 14 in das erste Zahnrad 10 der Abtriebswelle 9 eingreift. Durch Drehen der Antriebswelle 5 in eine zweite Drehrichtung, die der ersten Drehrichtung entgegengesetzt ist, wird die Koppeleinheit 14 axial entlang der Antriebswelle 5 in einen zweiten Positionsbereich verschoben, in dem das vierte Zahnrad 16 der Koppeleinheit 14 in das zweite Zahnrad 11 der Abtriebswelle 9 eingreift. Durch geeignetes Ausbilden des ersten Zahnrads 10, des zweiten Zahnrads 11, des dritten Zahnrads 15 und des vierten Zahnrads 16 kann das Getriebe 6 in dem zweiten Positionsbereich ein größeres Übersetzungsverhältnis aufweisen als in dem ersten Positionsbereich. Dazu ist ein Verhältnis einer Zähnezahl des ersten Zahnrads 10 zu einer Zähnezahl des dritten Zahnrads 15 größer als ein Verhältnis einer Zähnezahl des zweiten Zahnrads 11 zu einer Zähnezahl des vierten Zahnrads 16.

Der erste Getriebestrang 7 ist gebildet durch die Antriebswelle 5, das dritte Zahnrad 15 der Koppeleinheit 14, das erste Zahnrad 10 und die Abtriebswelle 9, wenn die Koppeleinheit 14 sich in ihrem ersten Positionsbereich befindet. Der zweite Getriebestrang 8 ist gebildet durch die Antriebswelle 5, das vierte Zahnrad 16 der Koppeleinheit 14, dem zweiten Zahnrad 11 und der Abtriebswelle 9, wenn die Koppeleinheit 14 sich in ihrem zweiten Positionsbereich befindet.

Figur 3 zeigt eine zweite Ausführungsform des Getriebes 6. Das erste Zahnrad 10 und das zweite Zahnrad 11 sind axial zueinander beabstandet an der Abtriebswelle 9 angeordnet, sind jedoch rotatorisch nicht an dieser befestigt, so dass sich die Abtriebswelle 9, das erste Zahnrad 10 und das zweite Zahnrad 11 jeweils unabhängig voneinander drehen können. Das erste Zahnrad 10 weist einen ersten Mitnehmer 19 und das zweite Zahnrad 11 weist einen zweiten Mitnehmer 20 auf. Der erste Mitnehmer 19 und der zweite Mitnehmer 20 sind jeweils einander zugewandt an dem jeweiligen Zahnrad angeordnet. In der Abtriebswelle 9 ist eine Längsverzahnung 21 ausgebildet. Die Koppeleinheit 14 ist so axial verschiebbar auf der Längsverzahnung 21 der Abtriebswelle 9 angeordnet, dass die Koppeleinheit 14 rotatorisch mit der Abtriebswelle 9 gekoppelt ist.

In der zweiten Ausführungsform des Getriebes 6 weist die Koppeleinheit 14 anstelle des dritten Zahnrads 15 einen dritten Mitnehmer 22 auf, der dem ersten Mitnehmer 19 des ersten Zahnrads 10 zugewandt ist und anstelle des vierten Zahnrads 16 einen vierten Mitnehmer 23 auf, der dem zweiten Mitnehmer 20 des zweiten Zahnrads 11 zugewandt ist.

Die Koppeleinheit 14 ist axial auf der Abtriebswelle 9 in den ersten Positionsbereich verschiebbar, in dem der dritte Mitnehmer 22 der Koppeleinheit 14 in den ersten Mitnehmer 19 des ersten Zahnrads 10 eingreift. An der Antriebswelle 5 ist ein fünftes Zahnrad 24 befestigt, das in das erste Zahnrad 10 eingreift. Der erste Getriebestrang 7 ist in dem ersten Positionsbereich gebildet durch die Antriebswelle 5, das fünfte Zahnrad 24, das erste Zahnrad 10, die Koppeleinheit 14 und die Abtriebswelle 9.

Die Koppeleinheit 14 ist ferner axial auf der Abtriebsachse 9 in den zweiten Positionsbereich verschiebbar, in dem der vierte Mitnehmer 23 der Koppeleinheit 14 in den zweiten Mitnehmer 20 des zweiten Zahnrads 11 eingreift. An der Antriebswelle 5 ist ein sechstes Zahnrad 25 angeordnet, das in das zweite Zahnrad 11 eingreift. Der zweite Getriebestrang 8 ist in dem zweiten Positionsbereich gebildet durch die Antriebswelle 5, das sechste Zahnrad 25, das zweite Zahnrad 11, die Koppeleinheit 14 und die Abtriebswelle 9.

Durch geeignetes Ausbilden des ersten Zahnrads 10, des zweiten Zahnrads 11, des fünften Zahnrads 24 und des sechsten Zahnrads 25 kann das Getriebe 6 in dem zweiten Positionsbereich ein größeres Übersetzungsverhältnis aufweisen als in dem ersten Positionsbereich. Dazu ist ein Verhältnis der Zähnezahl des ersten Zahnrads 10 zu einer Zähnezahl des fünften Zahnrads 24 größer als ein Verhältnis der Zähnezahl des zweiten Zahnrads 11 zu einer Zähnezahl des sechsten Zahnrads 25.

Die einander zugeordneten erste und dritte Mitnehmer 19, 22 und/oder die einander zugeordneten zweite und vierte Mitnehmer 20, 23 sind z.B. als Verzahnung oder als Stifte ausgebildet. Durch das Bewegen der Koppeleinheit 14 in den ersten oder in den zweiten Positionsbereich greifen dann z.B. die Verzahnungen oder die Stifte ineinander und ermöglichen so das Übertragen des Antriebsdrehmoments. Der erste, zweite, dritte und vierte Mitnehmer 19, 20, 22, 23 können jedoch auch anders ausgebildet sein.

Das Bewegen der Koppeleinheit 14 in den ersten Positionsbereich oder in den zweiten Positionsbereich kann in der zweiten Ausführungsform des Getriebes 6 beispielsweise durch einen geeignet angesteuerten zusätzlichen Stellantrieb erfolgen. Ferner können die Antriebswelle 5 und die Abtriebswelle 9 anstatt über das erste Zahnrad 10 und das fünfte Zahnrad 24 bzw. über das zweite Zahnrad 11 und das sechste Zahnrad 25 auch z.B. über Riemen oder Ketten miteinander gekoppelt sein. Dazu sind das erste und das fünfte Zahnrad 10, 24 und/oder das zweite und sechste Zahnrad 11, 25 geeignet auszubilden, z.B. als Riemenscheiben oder als Kettenräder. Der erste Getriebestrang 7 und/oder der zweite Getriebestrang 8 können auch weitere Getriebestufen umfassen, z.B. mit weiteren Zahnrädern, Riemenscheiben und Riemen oder Kettenrädern und Ketten.

Das Getriebe 6 ist im Allgemeinen so ausgebildet, dass sich die Koppeleinheit 14 entweder in ihrem ersten Positionsbereich oder in ihrem zweiten Positionsbereich befindet. Es kann auch zusätzlich mindestens ein neutraler Bereich vorgesehen sein. In dem mindestens einen neutralen Bereich ist die Koppeleinheit 14 von dem ersten Zahnrad 10 und dem zweiten Zahnrad 11 entkoppelt. Die Koppeleinheit 14 kann beispielsweise durch die Federelemente 18 bevorzugt in dem mindestens einen neutralen Bereich gehalten werden, wenn der Stellantrieb 4 die Antriebswelle 5 nicht antreibt.

## Patentansprüche

1. Getriebe für ein Bremssystem, bei dem
- das Getriebe (6) eingangsseitig über eine Antriebswelle (5) mit einem Stellantrieb (4) des Bremssystems (1) koppelbar ist und die Antriebswelle (5) durch den Stellantrieb (4) rotatorisch bewegbar ist und das Getriebe (6) ausgangsseitig über eine Abtriebswelle (9) mit einer Bremseinheit (3) des Bremssystems (1) koppelbar ist und die Bremseinheit (3) mindestens eine Bremse umfasst oder das Getriebe (6) die Antriebswelle (5) und/oder die Abtriebswelle (9) umfasst,
- das Getriebe (6) einen ersten und einen zweiten Getriebestrang (7, 8) mit unterschiedlich großem Übersetzungsverhältnis umfasst und
- das Getriebe (6) so ausgebildet ist, dass zum Anziehen der Bremse nur der erste Getriebestrang (7) und zum Lösen der Bremse nur der zweite Getriebestrang (8) des Getriebes (6) ein Antriebsdrehmoment des Stellantriebs (4) auf die Abtriebswelle (9) überträgt und das Übersetzungsverhältnis des zweiten Getriebestrangs (8) größer ist als das Übersetzungsverhältnis des ersten Getriebestrangs (7).

2. Getriebe nach Anspruch 1, das so ausgebildet ist, dass eine Auswahl entweder des ersten Getriebestrangs (7) oder des zweiten Getriebestrangs (8) abhängig von einer Drehrichtung der Antriebswelle (5) erfolgt.

3. Getriebe nach einem der vorstehenden Ansprüche, bei dem das Getriebe (6) eine Koppeleinheit (14) umfasst, die so angeordnet ist, dass diese in einen ersten und in einen zweiten Positionsbereich bewegbar ist, und dass die Antriebswelle (5) in dem ersten und in dem zweiten Positionsbereich jeweils über die Koppeleinheit (14) derart mit der Abtriebswelle (9) gekoppelt ist, dass durch das Koppeln in dem ersten Positionsbereich der erste Getriebestrang (7) gebildet ist und durch das Koppeln in dem zweiten Positionsbereich der zweite Getriebestrang (8) gebildet ist.

4. Getriebe nach Anspruch 3, bei dem in der Antriebswelle (5) oder der Abtriebswelle (9) eine Längsverzahnung (21) ausgebildet ist und das Koppelelement (14) so axial in den ersten Positionsbereich oder den zweiten Positionsbereich verschiebbar auf der Antriebswelle (5) bzw. der Abtriebswelle (9) angeordnet ist, dass das Koppelelement (14) durch die Längsverzahnung (21) rotatorisch mit der Antriebswelle (5) bzw. der Abtriebswelle (9) gekoppelt ist.

5. Getriebe nach Anspruch 3, bei dem in der Antriebswelle (5) eine schraubenförmige Nut (12) ausgebildet ist und die Koppeleinheit (14) einen Vorsprung (17) aufweist und die Koppeleinheit (14) so axial verschiebbar auf der Antriebswelle (5) angeordnet ist, dass der Vorsprung (17) in die Nut (12) eingreift und die Koppeleinheit (14) durch Drehen der Antriebswelle (5) abhängig von der Drehrichtung axial in den ersten Positionsbereich oder in den zweiten Positionsbereich verschoben wird.

6. Getriebe nach einem der Ansprüche 3 bis 5, bei dem die Koppeleinheit (14) für den ersten Getriebestrang (7) und den zweiten Getriebestrang (8) jeweils mindestens ein Zahnrad oder einen Mitnehmer umfasst, das bzw. der in dem ersten Positionsbereich bzw. in dem zweiten Positionsbereich mit einem dem jeweiligen Getriebestrang zugeordneten weiteren Zahnrad bzw. weiteren Mitnehmer eingreift zum Übertragen des Antriebsdrehmoments.

7. Bremssystem, das eine Antriebseinheit (2) und eine Bremseinheit (3) mit mindestens einer Bremse umfasst, die Antriebseinheit (2) umfasst
- einen Stellantrieb (4),
- eine Antriebswelle (5), die mit dem Stellantrieb (4) gekoppelt ist und die von diesem rotatorisch bewegbar ist,
- eine Abtriebswelle (9), die so mit der Bremseinheit (3) gekoppelt ist, dass die Bremseinheit (3) abhängig von einer Drehrichtung der Abtriebswelle (9) die Bremse anzieht oder löst,
- ein Getriebe (6) nach einem der Ansprüche 1 bis 6, das eingangsseitig mit der Antriebswelle (5) und ausgangsseitig mit der Abtriebswelle (9) gekoppelt ist oder das die Antriebswelle (5) und/oder die Abtriebswelle (9) umfasst.
